# EUROPÄISCHE PATENTSCHRIFT

(11) **EP 2 786 504 B1**
(45) Veröffentlichungstag und Bekanntmachung des Hinweises auf die Patenterteilung: **25.07.2018**
(21) Anmeldenummer: 12784521.2
(22) Anmeldetag: 23.10.2012
(51) Int. Cl.: H04B 5/00, G01D 18/00, G01F 23/26, G01F 25/00, G01D 21/00, G01N 9/34, G01F 23/296, G05B 11/01, H01H 51/00

(54) **SYSTEM AUS BEDIENGERÄT UND FELDGERÄT UND VERFAHREN ZUR KOMMUNIKATION MIT EINEM FELDGERÄT**
SYSTEM COMPRISING AN OPERATING DEVICE AND A FIELD DEVICE, AND METHOD FOR COMMUNICATING WITH A FIELD DEVICE
SYSTÈME COMPOSÉ D'UN APPAREIL DE COMMANDE ET D'UN APPAREIL DE TERRAIN ET PROCÉDÉ DE COMMUNICATION AVEC UN APPAREIL DE TERRAIN

(30) Priorität: 28.11.2011 DE 102011087230
(43) Veröffentlichungstag der Anmeldung: 08.10.2014
(73) Patentinhaber: Endress+Hauser SE+Co. KG, 79689 Maulburg (DE)
(72) Erfinder: WERNET, Armin, 79618 Rheinfelden (DE); UPPENKAMP, Kaj, 79664 Wehr (DE)
(74) Vertreter: Andres, Angelika Maria
(86) Internationale Anmeldenummer: PCT/EP2012/070935
(87) Internationale Veröffentlichungsnummer: WO 2013/079260

(56) Entgegenhaltungen:
- WO-A1-03/052358
- DE-A1-102009 007 109
- US-A1- 2009 174 921

## Beschreibung

Die vorliegende Erfindung betrifft ein System aus einem Bediengerät und einem Feldgerät mit mindestens einer Sensoreinheit zur Bestimmung und/oder Überwachung mindestens einer Prozessgröße. Weiterhin betrifft die Erfindung ein Feldgerät sowie ein Bediengerät zur Verwendung in dem System. Darüber hinaus betrifft die Erfindung ein Verfahren zur Kommunikation mit einem Feldgerät. Bei dem Feldgerät handelt es sich beispielsweise um ein Messgerät der Prozessautomatisierung, insbesondere um ein Messgerät zur Bestimmung des Füllstands, des Grenzstands, der Dichte, der Viskosität, oder der elektrischen Leitfähigkeit eines Mediums.

Bei einer Vielzahl an Feldgeräten ist eine fertigungsseitige Parametrierung erforderlich. Eine Möglichkeit hierfür besteht in der Nutzung einer Fertigungsschnittstelle, welche eine vorhandene Schnittstelle, beispielsweise HART, verwendet. Eine derartige Schnittstelle ist in der Regel jedoch nicht mehr nutzbar, wenn das Feldgerät vollständig montiert bzw. vergossen ist. Für den Abgleich eines fertig konfektionierten Feldgerätes ist daher eine separate Schnittstelle erforderlich. Solche Schnittstellen stellen eine kontaktlose Verbindung zu dem Parametriergerät her, beispielsweise über Funk, RFID oder auf optischem Wege. Die Implementierung derartiger Schnittstellen ist jedoch kostenintensiv oder auf Grund eines vollständig geschlossenen metallischen Feldgehäuses oftmals nicht realisierbar.

Die Aufgabe der Erfindung besteht darin, ein System aus einem Feldgerät mit einer kostengünstig realisierbaren Kommunikationsschnittstelle und einem Bediengerät, sowie ein kostengünstig realisierbares Verfahren zur Kommunikation zwischen Feldgerät und Bediengerät, anzugeben.

Die Aufgabe wird von einem System aus Feldgerät und Bediengerät dadurch gelöst, dass das Bediengerät dazu ausgestaltet ist, den Schaltzustand des Schaltelements zur Übertragung von feldgerätspezifischen Daten an die Elektronikeinheit zu modulieren.

Es sind Feldgeräte bekannt, welche ein von außen betätigbares Schaltelement zur Initiierung eines Kalibriervorgangs aufweisen. Das Schaltelement ist beispielsweise ein Reed-Kontakt. Dieser wird durch einen Magneten betätigt, welcher von außen an das Feldgerätgehäuse gehalten wird. Ein derartiges Feldgerät ist beispielsweise in der Offenlegungsschrift DE 101 62 334 A1 beschrieben. Die Erfindung sieht nun vor, dass ein von außen betätigbares Schaltelement nicht nur zum Auslösen einer bestimmten Funktion aktiviert wird, sondern dass eine Kommunikationsschnittstelle über ein derartiges Schaltelement realisiert ist.

Das Schaltelement ist ein kontaktlos betätigbares Schaltelement. Hierdurch wird es ermöglicht, das Gehäuse des Feldgerätes hermetisch dicht auszuführen, ohne auf einen Zugriff auf die Elektronikeinheit des Feldgerätes zu verzichten. Vorzugsweise handelt es sich um genau ein Schaltelement. Die Elektronikeinheit ist dazu ausgestaltet, Daten in Form von elektrischen Signalen, beispielsweise Stromimpulsen, von dem Schaltelement zu empfangen.

In einer ersten Ausgestaltung ist das Schaltelement von außerhalb des Feldgerätes über ein Magnetfeld betätigbar und das Bediengerät erzeugt ein modulierbares Magnetfeld. Bei dem Schaltelement handelt es sich um ein analoges oder digitales magnetfeld-sensitives Bauelement, vorzugsweise um einen analogen oder digitalen Hallsensor oder einen Reed-Schalter. Häufig ist in einem Feldgerät bereits ein Reed-Schalter vorhanden, beispielsweise zum Auslösen einer Kalibrierfunktion oder eines Funktionstests. In diesem Fall ist die Kommunikation über einen Reed-Schalter besonders kostengünstig umsetzbar, da ein ohnehin vorhandenes Element für die Kommunikation verwendet wird. Im Unterschied zu aus dem Stand der Technik bekannten Reed-Schaltern besitzt der Reed-Schalter bei einem erfindungsgemäßen Feldgerät nicht nur die Funktion eines Aktivierungsschalters, sondern dient statt dessen oder darüber hinaus der Datenübertragung. Hierbei werden Daten von dem Bediengerät oder von einem externen Gerät ausgehend an das Feldgerät übertragen. In letzterem Fall dient das Bediengerät als Mittler, da nur das Bediengerät dazu ausgestaltet ist, das in das Feldgerät integrierte Schaltelement zu steuern.

In einer Ausgestaltung weist das Feldgerät mindestens ein optisches Anzeigeelement auf und die Elektronikeinheit überträgt über das optische Anzeigeelement Daten an das Bediengerät. Das Bediengerät besitzt entsprechend eine optische Sensoreinrichtung zur Erfassung und Verarbeitung der optischen Signale. Durch das optische Anzeigeelement ist eine optische Schnittstelle als Rücklesefunktion ausgestaltet. Bei den Daten, welche das Feldgerät an das Bediengerät überträgt, handelt es sich beispielsweise um Daten bezüglich der Konfiguration oder des Betriebszustands des Feldgeräts, um Messparameter oder andere feldgerätspezifische Daten.

Die Aufgabe wird weiterhin gelöst durch ein Feldgerät zur Verwendung in einem erfindungsgemäßen System, mit mindestens einem Sensorelement zur Bestimmung und/oder Überwachung mindestens einer Prozessgröße, mit mindestens einer Elektronikeinheit und mit mindestens einem kontaktlos von außerhalb des Feldgerätes betätigbaren Schaltelement, wobei die Elektronikeinheit dazu ausgestaltet ist, feldgerätspezifische Daten über das Schaltelement zu empfangen. Die über das Schaltelement übertragenen feldgerätspezifischen Daten sind beispielsweise Parametrierdaten oder Diagnosedaten. Die Elektronikeinheit speichert die übertragenen Daten beispielsweise in einer Speichereinheit ab, sodass diese bei der Messung zur Verfügung stehen, oder nimmt gemäß den Daten entsprechende Einstellungen vor. Handelt es sich um Diagnosedaten führt die Elektronikeinheit eine bestimmte Diagnosefunktion aus. Über das kontaktlos betätigbare Schaltelement ist nicht nur ein Ablegen von Information in dem Feldgerät, sondern auch ein Abrufen von Information möglich. Beispielsweise gibt das Feldgerät die abgerufene Information über eine 4-20mA Schnittstelle aus.

Weiterhin wird die Aufgabe gelöst durch ein Bediengerät zur Verwendung in einem erfindungsgemäßen System, mit mindestens einer Felderzeugungseinheit zur Erzeugung eines modulierbaren Magnetfeldes, wobei die Felderzeugungseinheit derart ausgestaltet ist, dass das von der Felderzeugungseinheit erzeugte Magnetfeld den Schaltzustand des Schaltelements des Feldgerätes moduliert. Die Felderzeugungseinheit ist vorzugsweise als von einem steuerbaren Strom durchflossene Spule mit Spulenkern ausgestaltet.

In einer Ausgestaltung weist das Bediengerät eine optische Sensoreinrichtung auf, welche von dem Feldgerät ausgehende optische Signale erfasst. Die optische Sensoreinrichtung ist vorzugsweise derart angeordnet, dass sie vor Umgebungslicht geschützt ist. Vorzugsweise wandelt die optische Sensoreinrichtung die optischen Signale in elektrische Signale, beispielsweise Spannungssignale, um und stellt diese als Ausgangssignal bereit. Entweder verfügt das Bediengerät über eine Auswerteeinheit zur Auswertung des Ausgangssignals der optischen Sensoreinrichtung oder das Ausgangssignal wird einem externen Gerät, beispielsweise einem Computer, zugeführt.

Eine weitere Ausgestaltung sieht vor, dass das Bediengerät eine zweite Elektronikeinheit und Mittel zur Eingabe von feldgerätspezifischen Daten aufweist oder mit einer zweiten Elektronikeinheit und Mitteln zur Eingabe von feldgerätspezifischen Daten verbindbar ist, dass in der zweiten Elektronikeinheit ein Protokoll für die Übertragung der feldgerätspezifischen Daten an das Feldgerät hinterlegt ist, und dass die zweite Elektronikeinheit die Felderzeugungseinheit derart steuert, dass die Felderzeugungseinheit das Magnetfeld entsprechend dem Protokoll und den zu übertragenden Daten erzeugt. Die Kommunikation zwischen dem Feldgerät und dem Bediengerät über das Schaltelement erfolgt über gemäß dem vereinbarten Protokoll erzeugte Telegramme. Die Kommunikation über eine gegebenenfalls vorhandene optische Schnittstelle erfolgt ebenfalls nach dem vereinbarten Protokoll.

Weiterhin wird die Aufgabe gelöst durch ein Verfahren zur Kommunikation zwischen einem Bediengerät und einem Feldgerät mit mindestens einer Sensoreinheit, mindestens einer Elektronikeinheit und mindestens einem kontaktlos von außerhalb des Feldgerätes betätigbaren Schaltelement, wobei zur Übertragung von feldgerätspezifischen Daten von dem Bediengerät an die Elektronikeinheit der Schaltzustand des Schaltelements moduliert wird. Über das Schaltelement erfolgt eine serielle Datenkommunikation.

In einer Ausgestaltung des Verfahrens wird der Schaltzustand des Schaltelements gemäß einem Übertragungsprotokoll moduliert. Für den Fall, dass das Schaltelement als magnetfeld-sensitives Element ausgestaltet ist, wird das Übertragungsprotokoll hierbei so gewählt, dass überwiegend der offene Zustand vorliegt und nur so oft wie unbedingt erforderlich Impulse übermittelt werden. Das Element, welches das Magnetfeld erzeugt, ist im einfachsten Fall eine Spule mit einem Spulenkern. Durch die Ausgestaltung, dass das Schalelement vorwiegend im offenen Zustand gehalten wird, wird vermieden, dass der Spulenkern bei der Erzeugung des für die Datenübertragung erforderlichen Magnetfelds in Sättigung geht. Ein geeignetes Protokoll ist beispielsweise ein aus der Übertragungstechnik über Infrarotschnittstellen bekanntes IrDA-Protokoll, wie z.B. SIR (Serial Infrared). Das erfindungsgemäße Verfahren ermöglicht eine sichere Übertragung feldgerätspezifischer Daten an das Feldgerät, welche insbesondere checksummengesichert ausgestaltet sein kann.

In einer Ausgestaltung des Verfahrens werden mittels des Schaltelements Parametrierdaten und/oder Diagnosedaten übertragen. Parametrierdaten umfassen sämtlich Daten, welche Einstellungen des Feldgerätes betreffen, beispielsweise Kalibrierdaten, Parameter hinterlegter Vergleichskurven für die Messung, Toleranzen bei der Bestimmung des Wertes eines Ausgangssignals, die Gerätevariante, oder Information bezüglich Zusatzfunktionen. Die Parametrierdaten werden von der Elektronikeinheit in einer Speichereinheit gespeichert. Diagnosedaten beinhalten Daten, welche in irgendeiner Weise dazu geeignet sind, einen Fehler in einer oder mehreren Komponenten des Feldgerätes zu diagnostizieren. Die Diagnose kann sich auch auf ein zukünftiges Verhalten der Komponenten im Hinblick auf Predictive Maintenance beziehen. Beispielsweise veranlassen die Diagnosedaten, dass ein vorbestimmtes Ausgangssignal erzeugt oder eine LED aktiviert wird.

Ein Vorteil der Erfindung besteht beispielsweise im Zusammenhang mit Füllstandmessgeräten darin, dass eine Möglichkeit geschaffen ist, eine in der Elektronikeinheit des Feldgeräts abgelegte Schaltkurve nachträglich verändern zu können, ohne das Feldgerät demontieren zu müssen. Bei der Fertigung des Feldgerätes ergibt sich weiterhin der Vorteil, dass eine Kalibrierung oder ein Abgleich bei vollständig montiertem Feldgerät mit vergossener Elektronikeinheit durchführbar sind, sodass eventuelle Einflüsse des Vergusses auf die Bestimmung oder Überwachung der Prozessgröße bereits berücksichtigt werden können.

Die Erfindung wird anhand der nachfolgenden Figuren näher erläutert.
- Fig. 1: zeigt eine erste Ausführungsform eines Systems aus Feldgerät und Bediengerät;
- Fig. 2: zeigt eine zweite Ausführungsform eines Systems aus Feldgerät und Bediengerät.

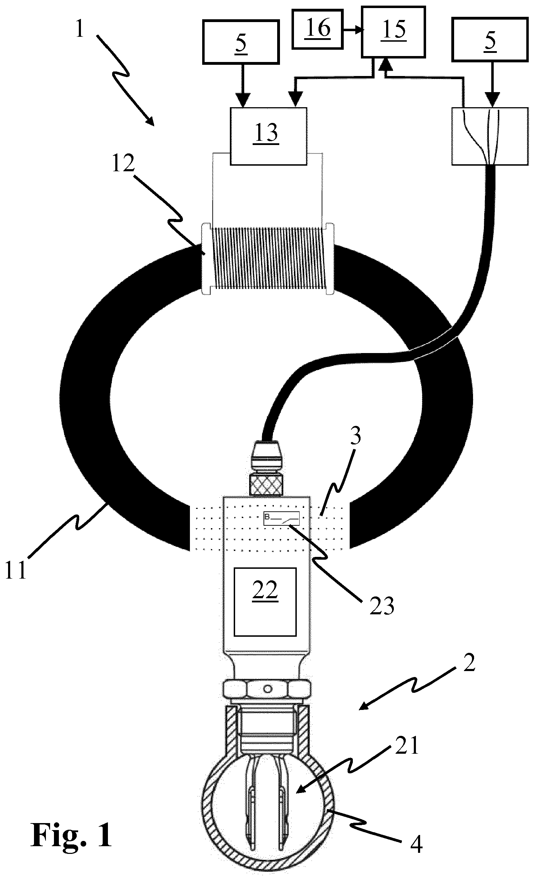

In Fig. 1 ist eine erste Ausführungsform eines Feldgerätes 2 mit einer Sensoreinheit 21 zur Bestimmung der Dichte, der Viskosität, und/oder eines Grenzfüllstands eines Mediums, sowie einem Bediengerät 1 zur Kommunikation mit dem Feldgerät 2 dargestellt. Weiterhin ist schematisch ein Behälter 4 dargestellt, an welchem das Feldgerät 2 befestigt ist.

Die Sensoreinheit 21 des Feldgerätes 2 weist eine schwingfähige Einheit in Form einer Gabel mit paddelförmigen Zinken auf. Zur Bestimmung, ob ein durch die Höhe, auf welcher die Sensoreinheit 21 in dem Behälter 4 angeordnet ist, vorgegebener Füllstand bzw. Grenzstand erreicht ist, wird die schwingfähige Einheit von einer Antriebs- und Empfangseinheit zu mechanischen Schwingungen mit der Resonanzfrequenz angeregt. Die Antriebs- und Empfangseinheit empfängt weiterhin die Schwingungen der schwingfähigen Einheit und wandelt sie in ein elektrisches Signal um. Bei der Antriebseinheit- und Empfangseinheit handelt es sich vorzugsweise um eines oder mehrere piezoelektrische Elemente. Das Erreichen des Füllstands ist durch eine Änderung der Schwingfrequenz detektierbar, welche erfolgt wenn sich das Medium ändert, das die Schwinggabel umgibt. Die Elektronikeinheit 22 des Feldgerätes 2 steuert oder regelt die Frequenz, mit welcher die schwingfähige Einheit zu Schwingungen angeregt wird und wertet die empfangenen Schwingungen aus. Hierzu befindet sich in der Elektronikeinheit 22 eine Auswerteeinheit, welche beispielsweise die Schwingfrequenz mit mindestens einem vorgegebenen Schwellenwert vergleicht und ein Ausgangssignal des Feldgerätes 2 erzeugt, welches angibt ob der Schwellenwert erreicht ist oder nicht. Das Ausgangssignal ist beispielsweise ein 4-20mA Signal. Die Elektronikeinheit 22 weist vorzugsweise mindestens einen Mikrocontroller auf. Ein Messgerät der beschriebenen Art wird von der Anmelderin unter dem Namen "Liquiphant" in einer Vielzahl an Ausgestaltungen hergestellt und vertrieben.

Die Erfindung wird an Hand dieses vibronischen Füllstandsmessgerätes näher erläutert. Die Erfindung ist jedoch nicht auf derartige Feldgeräte 2 beschränkt, sondern überall einsetzbar, wo eine Kommunikation mit der Elektronikeinheit 22 des Feldgerätes 2 über eine kontaktlose Schnittstelle erwünscht ist. Vorteilhaft ist die Erfindung insbesondere auch bei auf dem kapazitiven und/oder konduktiven Messprinzip beruhenden Grenzstandschaltern einsetzbar. Derartige Grenzstandschalter werden von der Anmelderin unter dem Namen "Liquipoint" hergestellt und angeboten.

In dem Inneren des Feldgerätgehäuses ist ein kontaktlos von außerhalb des Feldgerätes 2 betätigbares Schaltelement in Form eines Reed-Schalters 23 angeordnet. Derartige Schalter sind aus dem Stand der Technik wohlbekannt und weisen in der Regel zwei Zungen aus einem ferroelektrischen Material auf, welche einander im Ruhezustand überlappen, ohne sich zu berühren. Der Schalter 23 ist im Ruhezustand geöffnet. Wird diese Anordnung in ein Magnetfeld eingebracht, ziehen die Zungen einander an, sodass der Schalter 23 schließt. Der Reed-Schalter 23 ist mit der Elektronikeinheit 22 des Feldgerätes 2 elektrisch verbunden.

In einer Ausführungsform des Feldgerätes 2 dient der Reed-Schalter 23 im laufenden Betrieb als Aktivierungsschalter, beispielsweise um eine Testfunktion oder eine Kalibrierfunktion auszulösen, deren Ablauf in der Elektronikeinheit 22 gespeichert ist. Bei der Fertigung, bei der Wartung oder während der Wahrnehmung einer Serviceaufgabe durch einen Servicetechniker fungiert der Reed-Schalter 23 als Kommunikationsschnittstelle und ermöglicht die Übertragung feldgerätspezifischer Daten. Zur Betätigung des Reed-Schalters 23 existieren dann vorzugsweise zwei unterschiedliche Vorrichtungen. Zur einmaligen Betätigung des Reed-Schalters 23 kann beispielsweise ein Prüfmagnet dienen, welcher an das Feldgehäuse gehalten wird. Die zweite Vorrichtung ist das dargestellte Bediengerät 1 und ermöglicht ein Modulieren des Schaltzustands gemäß einem vereinbarten Übertragungsprotokoll. Das Bediengerät 1 ist folglich komplexer als ein einfacher Magnet. Selbstverständlich kann das Bediengerät 1 auch die Funktion des Prüfmagneten übernehmen und den Reed-Schalter 23 einmalig betätigen.

Das Bediengerät 1 ist derart ausgestaltet, dass es mit dem Feldgerät 2 über den in dem Feldgerät 2 vorhandenen Reed-Schalter 23 kommunizieren kann. Hierzu besitzt das Bediengerät 1 eine Felderzeugungseinheit, welche eine Spule 12, einen Spulenkern 11 und ein Leistungssteuerungsmodul 13 umfasst. Weiterhin sind eine Schnittstelle zu einer Energiequelle 5 und eine Schnittstelle zu einer externen Elektronikeinheit 15 mit Mitteln zur Eingabe von Daten vorhanden. Zur Unterscheidung von der Elektronikeinheit 22 des Feldgerätes 2 wird diese Elektronikeinheit als zweite Elektronikeinheit 15 bezeichnet.

Die zweite Elektronikeinheit 15 ist beispielsweise Teil eines Computers. In diesem Fall sind die Daten über die Tastatur 16 des Computers eingebbar. Alternativ kann die zweite Elektronikeinheit 15 auch als Bestandteil des Bediengerätes 1 ausgestaltet sein. Das Bediengerät 1 weist dann zur Eingabe von Daten beispielsweise eine Tastatur, Eingabeknöpfe, oder einen Touchscreen auf.

Das Leistungssteuerungsmodul 13 ist mit einer Energiequelle 5 verbunden und steuert die Leistung des Stroms, welcher durch die Wicklungen der Spule 12 fließt. Weiterhin ist das Leistungssteuerungsmodul 13 mit der zweiten Elektronikeinheit 15 verbunden. Diese steuert das Leistungssteuerungsmodul 13 entsprechend der zu übertragenden Daten und gemäß dem Übertragungsprotokoll, welches mit der Elektronikeinheit 22 des Feldgerätes 2 vereinbart ist. Der Spulenkern 11 ist ringförmig ausgestaltet und weist einen breiten Schlitz auf, in welchen das Feldgerät 2 mit dem Abschnitt, in welchem der Reed-Schalter 23 angeordnet ist, einbringbar ist. Die Magnetfeldlinien des von der Spule 12 erzeugten Magnetfeldes verlaufen in dem Bereich des Schlitzes näherungsweise parallel zueinander.

Das Feldgerät 2 ist über ein Anschlusskabel ebenfalls an eine Energiequelle 5 angeschlossen. Das Ausgangssignal des Feldgerätes 2 wird über dasselbe Anschlusskabel der zweiten Elektronikeinheit 15 zugeführt. Hierdurch ist es dem Feldgerät 2 ermöglicht, eine Antwort auf die ihm über den Reed-Schalter 23 zugeführten Daten zu übermitteln, beispielsweise als Kontrollfunktion für die korrekte Übertragung dieser Daten.

Das Bediengerät 1 stellt über den Reed-Schalter 23 beispielsweise folgende Parameter in der Elektronikeinheit 22 des Füllstandsmessgerätes ein:
- die Gerätevariante (Min oder Max, d.h. Überwachung des Unterschreitens oder Überschreitens eines vorgegebenen Füllstands)
- das Schaltverhalten, beispielsweise, ob eine Bedeckung mit Schaum zu einer Bedeckt-Meldung oder einer Unbedeckt-Meldung führt
- Parameter der Schaltkurve
- Kalibrierdaten bzw. bei einem fertigungsseitigen Abgleich gewonnene sensorspezifische Daten
- Freigabe bestimmter Sonderfunktionen, die in der Elektronikeinheit des Feldgerätes hinterlegt sind.

Weiterhin kann das Bediengerät 1 Diagnosefunktionen ausführen, wie das testweise Setzen von Anzeigeelementen wie Leuchtdioden 24 oder das Erzeugen eines bestimmten Ausgangssignals bewirken.

Zur Datenübertragung an das Feldgerät 2 wird vorzugsweise ein Protokoll gewählt, dessen Umsetzung wenig Energie benötigt. Im Idealfall bedeutet dies, dass im Grundzustand kein Magnetfeld anliegt. Hierdurch wird gleichzeitig vermieden, dass durch längeres dauerhaftes Anlegen des Magnetfelds der Spulenkern 11 in Sättigung geht. Eine weitere Möglichkeit zur Vermeidung einer Sättigung besteht in der Erzeugung eines Magnetfelds mit wechselnder Polung.

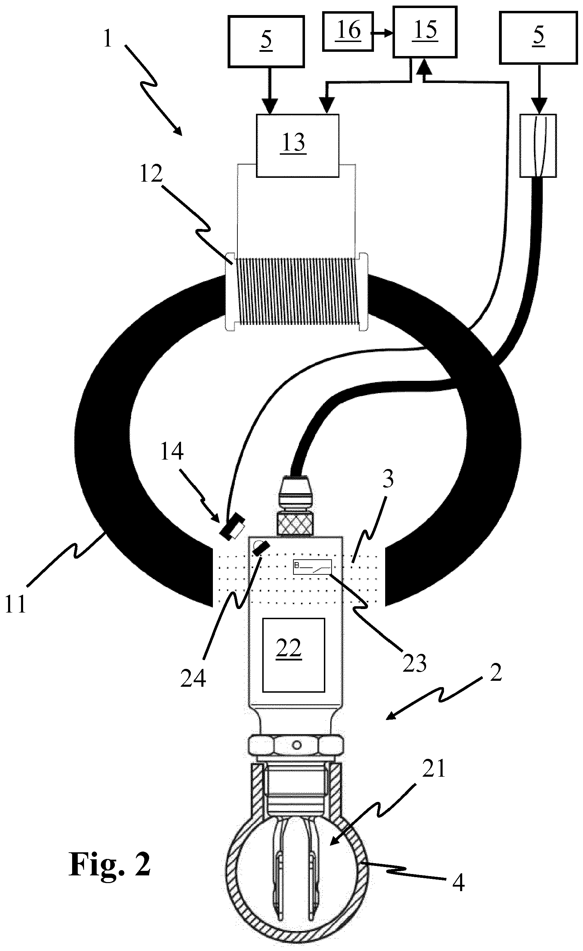

In Fig. 2 sind das Feldgerät 2 und das Bediengerät 1 in einer zweiten Ausführungsvariante dargestellt. Diese Ausführungsform unterscheidet sich von der in Fig. 1 dargestellten Ausführungsform in der Ausgestaltung des Kommunikations-Rückkanals.

Die Rückkommunikation von dem Feldgerät 2 an das Bediengerät 1 bzw. an die externe zweite Elektronikeinheit 15 erfolgt über eine optische Schnittstelle. Zur Kommunikation nach außen steuert die Elektronikeinheit 22 des Feldgerätes 2 eine oder mehrere optische Anzeigelemente, vorzugsweise in Form von Leuchtdioden 24 an. Das Bediengerät 1 besitzt eine optische Sensoreinrichtung 14 zur Erfassung der optischen Signale, welche von der Leuchtdiode 24 des Feldgerätes 2 ausgesandt werden. Vorzugsweise ist die optische Sensoreinrichtung 14 abgeschirmt von Umgebungslicht angeordnet, sodass die optischen Signale des Feldgerätes 2 eindeutig und zuverlässig erfassbar sind. Das Bediengerät 1 kann hierzu auch ein Gehäuse aufweisen.

Die Leuchtdiode 24 kann einmalig aktiviert werden oder gemäß einem Protokoll aktiviert und deaktiviert werden und somit der Datenübertragung dienen. Beispielsweise setzt die Elektronikeinheit 22 des Feldgerätes 2 eine Leuchtdiode 24, wenn eine Parametrierung über den Reed-Schalter 23 erfolgreich durchgeführt wurde. Weiterhin ist es denkbar, dass das Bediengerät 1 die Durchführung eines Funktionstests auslöst, bei welchem die Schaltfunktion testweise ausgelöst wird. Die Leuchtdiode 24 kann dann den Schaltzustand signalisieren.

Das Bediengerät 1 ist weiterhin dazu ausgestaltet das Auslesen bestimmter Daten aus dem Feldgerät 2 zu veranlassen, wobei das Feldgerät 2 die angeforderten Daten gemäß dem vereinbarten Protokoll über die optische Schnittstelle überträgt.

### Bezugszeichenliste

- 1: Bediengerät
- 11: Spulenkern
- 12: Spule
- 13: Leistungssteuerungsmodul
- 14: Optische Sensoreinrichtung
- 15: Zweite Elektronikeinheit
- 16: Tastatur
- 2: Feldgerät
- 21: Sensoreinheit
- 22: Elektronikeinheit
- 23: Reed-Schalter
- 24: LED
- 3: Magnetfeldlinien
- 4: Behälter
- 5: Energiequelle

## Patentansprüche

1. System aus einem Bediengerät (1) und einem Feldgerät (2) mit mindestens einer Sensoreinheit (21) zur Bestimmung und/oder Überwachung mindestens einer Prozessgröße, mit mindestens einer Elektronikeinheit (22), welche eine Auswerteeinheit aufweist, wobei die Auswerteeinheit dazu ausgestaltet ist, Messsignale von der Sensoreinheit (21) zu empfangen und in Bezug auf die Prozessgröße auszuwerten, und mit mindestens einem kontaktlos von außerhalb des Feldgerätes (2) betätigbaren Schaltelement (23),
**dadurch gekennzeichnet,**
**dass** das Bediengerät (1) dazu ausgestaltet ist, den Schaltzustand des Schaltelements (23) zur Übertragung von feldgerätspezifischen Daten an die Elektronikeinheit (22) zu modulieren.

2. System nach Anspruch 1,
**dadurch gekennzeichnet,**
**dass** das Schaltelement (23) von außerhalb des Feldgerätes (2) über ein Magnetfeld betätigbar ist,
und
**dass** das Bediengerät (1) ein modulierbares Magnetfeld erzeugt.

3. System nach Anspruch 1 oder 2,
**dadurch gekennzeichnet,**
**dass** das Feldgerät (2) mindestens ein optisches Anzeigeelement (24) aufweist,
und
**dass** die Elektronikeinheit (22) über das optische Anzeigeelement (24) Daten an das Bediengerät (1) überträgt.

4. Feldgerät (2) zur Verwendung in einem System nach einem der vorangehenden Ansprüche, mit mindestens einem Sensorelement (21) zur Bestimmung und/oder Überwachung mindestens einer Prozessgröße, mit mindestens einer Elektronikeinheit (22) und mit mindestens einem kontaktlos von außerhalb des Feldgerätes (2) betätigbaren Schaltelement (23),
**dadurch gekennzeichnet,**
**dass** die Elektronikeinheit (22) dazu ausgestaltet ist, feldgerätspezifische Daten über das Schaltelement (23) zu empfangen.

5. Bediengerät (1) zur Verwendung in einem System nach einem der Ansprüche 2 oder 3, mit mindestens einer Felderzeugungseinheit (11, 12, 13) zur Erzeugung eines modulierbaren Magnetfeldes, wobei die Felderzeugungseinheit (11, 12, 13) derart ausgestaltet ist, dass das von der Felderzeugungseinheit (11, 12, 13) erzeugte Magnetfeld den Schaltzustand des Schaltelements (23) des Feldgerätes (2) moduliert.

6. Bediengerät nach dem vorangehenden Anspruch,
**dadurch gekennzeichnet,**
**dass** das Bediengerät (1) eine optische Sensoreinrichtung (14) aufweist, welche von dem Feldgerät (2) ausgehende optische Signale erfasst.

7. Bediengerät nach Anspruch 5 oder 6,
**dadurch gekennzeichnet,**
**dass** das Bediengerät (1) eine zweite Elektronikeinheit (15) und Mittel zur Eingabe (16) von feldgerätspezifischen Daten aufweist oder mit einer zweiten Elektronikeinheit (15) und Mitteln zur Eingabe (16) von feldgerätspezifischen Daten verbindbar ist,
**dass** in der zweiten Elektronikeinheit (15) ein Protokoll für die Übertragung der feldgerätspezifischen Daten an das Feldgerät (2) hinterlegt ist,
und
**dass** die zweite Elektronikeinheit (15) die Felderzeugungseinheit (11,12, 13) derart steuert, dass die Felderzeugungseinheit (11, 12, 13) das Magnetfeld entsprechend dem Protokoll und den zu übertragenden Daten erzeugt.

8. Verfahren zur Kommunikation zwischen einem Bediengerät (1) und einem Feldgerät (2) mit mindestens einer Sensoreinheit (21), mindestens einer Elektronikeinheit (22) und mindestens einem kontaktlos von außerhalb des Feldgerätes (2) betätigbaren Schaltelement (23), wobei zur Übertragung von feldgerätspezifischen Daten von dem Bediengerät (1) an die Elektronikeinheit (22) der Schaltzustand des Schaltelements (23) moduliert wird.

9. Verfahren nach Anspruch 8,
**dadurch gekennzeichnet,**
**dass** der Schaltzustand des Schaltelements (23) gemäß einem Übertragungsprotokoll moduliert wird.

10. Verfahren nach Anspruch 8 oder 9,
**dadurch gekennzeichnet,**
**dass** mittels des Schaltelements (23) Parametrierdaten und/oder Diagnosedaten übertragen werden.

## Claims

1. System consisting of an operating unit (1) and a field device (2) with at least one sensor unit (21) for determining and/or monitoring at least one process variable with at least one electronics unit (22) which has an evaluation unit, wherein the evaluation unit is designed to receive measuring signals from the sensor unit (21) and to evaluate them in relation to the process variable, and with at least one switching element (23) which can be operated from outside the field device (2) in a contactless manner,
**characterized in that**
the operating device (1) is designed to modulate the switching state of the switching element (23) for the transmission of field device-specific data to the electronics unit (22).

2. System as claimed in Claim 1,
**characterized in that**
the switching element (23) can be operated from outside the field device (2) via a magnetic field
and
**in that** the operating device (1) generates a magnetic field which can be modulated.

3. System as claimed in Claim 1 or 2,
**characterized in that**
the field device (2) has at least one optical display element (24),
and
**in that** the electronics unit (22) transmits data to the operating unit (1) via the optical display element (24).

4. Field device (2) for use in a system as claimed in one of the previous claims, with at least one sensor element (21) for determining and/or monitoring at least one process variable with at least one electronics unit (22) and with at least one switching element (23) which can be operated from outside the field device (2) in a contactless manner,
**characterized in that**
the electronics unit (22) is designed to receive field device-specific data via the switching element (23).

5. Operating unit (1) for use in a system as claimed in one of the Claims 2 or 3, with at least one field generation unit (11, 12, 13) for generating a magnetic field which can be modulated, wherein the field generation unit (11, 12, 13) is designed in such a way that the magnetic field generated by the field generation unit (11, 12, 13) modulates the switching state of the switching element (23) of the field device (2).

6. Operating unit as claimed in the previous claim,
**characterized in that**
the operating unit (1) has an optical sensor unit (14) which records optical signals coming from the field device (2).

7. Operating unit as claimed in Claim 5 or 6,
**characterized in that**
the operating unit (1) has a second electronics unit (15) and means to enter (16) field device-specific data or can be connected to a second electronics unit (15) and means to enter (16) field device-specific data,
**in that** a protocol for the transmission of the field device-specific data to the field device (2) is saved in the second electronics unit (15),
and
**in that** the second electronics unit (15) controls the field generation unit (11, 12, 13) in such a way that the field generation unit (11, 12, 13) generates the magnetic field in accordance with the protocol and the data to be transmitted.

8. Procedure for communication between an operating unit (1) and a field device (2) with at least a sensor unit (21), at least an electronics unit (22) and at least a switching element (23) which can be operated from outside the field device (2) in a contactless manner, wherein the switching state of the switching element (23) is modulated for the transmission of field device-specific data from the operating unit (1) to the electronics unit (22).

9. Procedure as claimed in Claim 8,
**characterized in that**
the switching state of the switching element (23) is modulated in accordance with a transmission protocol.

10. Procedure as claimed in Claim 8 or 9,
**characterized in that**
configuration data and/or diagnostics data are transmitted by means of the switching element (23)

## Revendications

1. Système constitué d'un appareil de commande (1) et d'un appareil de terrain (2) avec au moins une unité de capteur (21), destiné à la détermination et/ou la surveillance d'au moins une grandeur process, avec au moins une unité électronique (22), laquelle comporte une unité d'exploitation, l'unité d'exploitation étant conçue de telle sorte à recevoir des signaux de mesure de l'unité de capteur (21) et à les exploiter en référence à la grandeur process, et avec au moins un élément de commutation (23) pouvant être actionné sans contact depuis l'extérieur de l'appareil de terrain (2),
**caractérisé**
**en ce que** l'appareil de commande (1) est conçu de telle sorte à moduler l'état de commutation de l'élément de commutation (23) en vue de la transmission à l'unité électronique (22) des données spécifiques à l'appareil de terrain.

2. Système selon la revendication 1,
**caractérisé**
**en ce que** l'élément de commutation (23) peut être commandé depuis l'extérieur de l'appareil de terrain (2) via un champ magnétique,
et
**en ce que** l'appareil de commande (1) génère un champ magnétique modulable.

3. Système selon la revendication 1 ou 2,
**caractérisé**
**en ce que** l'appareil de terrain (2) comporte au moins un élément d'affichage optique (24),
et
**en ce que** l'unité électronique (22) transmet à l'appareil de commande (1) des données via l'élément d'affichage optique (24).

4. Appareil de terrain (2) destiné à une utilisation dans un système selon l'une des revendications précédentes, avec au moins une unité de capteur (21), destiné à la détermination et/ou la surveillance d'au moins une grandeur process, avec au mois une unité électronique (22) et avec au moins un élément de commutation (23) pouvant être actionné sans contact depuis l'extérieur de l'appareil de terrain,
**caractérisé**
**en ce que** l'unité électronique (22) est conçue de telle sorte à recevoir les données spécifiques à l'appareil de terrain via l'élément de commutation (23).

5. Appareil de commande (1) destiné à une utilisation dans un système selon l'une des revendications 2 ou 3, avec au moins une unité de génération de champ (11, 12, 13) destinée à la génération d'un champ magnétique modulable, l'unité de génération de champ (11, 12, 13) étant conçue de telle sorte à ce que le champ magnétique généré par l'unité de génération de champ (11, 12, 13) module l'état de commutation de l'élément de commutation (23) de l'appareil de terrain (2).

6. Appareil de commande selon la revendication précédente,
**caractérisé**
**en ce que** l'appareil de commande (1) comporte un dispositif capteur (14), lequel détecte des signaux optiques sortant de l'appareil de terrain (2).

7. Appareil de commande selon la revendication 5 ou 6,
**caractérisé**
**en ce que** l'appareil de commande (1) comporte une deuxième unité électronique (15) et des moyens destinés à l'entrée (16) de données spécifiques à l'appareil de terrain, ou peut être relié avec une deuxième unité électronique (15) et des moyens pour l'entrée (16) de données spécifiques à l'appareil de terrain,
**en ce qu'**est enregistré, dans la deuxième unité électronique (15), un protocole pour la transmission à l'appareil de terrain (2) des données spécifiques à l'appareil de terrain,
et
**en ce que** la deuxième unité électronique (15) commande l'unité de génération de champ (11, 12, 13) de telle manière que l'unité de génération de champ (11, 12, 13) génère le champ magnétique conformément au protocole et aux données à transmettre.

8. Procédé destiné à la communication entre un appareil de commande (1) et un appareil de terrain (2) avec au moins une unité de capteur (21), au moins une unité électronique (22) et au moins un élément de commutation (23) pouvant être actionné sans contact depuis l'extérieur de l'appareil de terrain (2), l'état de commutation de l'élément de commutation (23) étant modulé pour la transmission de données spécifiques à l'appareil de terrain depuis l'appareil de commande (1) à l'unité électronique (22).

9. Procédé selon la revendication 8,
**caractérisé**
**en ce que** l'état de commutation de l'élément de commutation (23) est modulé conformément à un protocole de transmission.

10. Procédé selon la revendication 8 ou 9,
**caractérisé**
**en ce que** des données de paramétrage et/ou des données de diagnostic sont transmises au moyen de l'élément de commutation (23).
